# EUROPEAN PATENT SPECIFICATION

(11) **EP 3 712 410 B1**
(45) Date of publication and mention of the grant of the patent: **18.12.2024**
(21) Application number: 20163495.3
(22) Date of filing: 17.03.2020
(51) Int. Cl.: F02C 7/32, F02C 7/236

(54) **MECHANICAL DEMAND FUEL PUMPING SYSTEM**
MECHANISCHES BEDARFSGESTEUERTES KRAFTSTOFFPUMPSYSTEM
SYSTÈME DE POMPAGE MÉCANIQUE DE CARBURANT À LA DEMANDE

(30) Priority: 20.03.2019 US 201962821055 P
(43) Date of publication of application: 23.09.2020
(73) Proprietor: RTX Corporation, Farmington, CT 06032 (US)
(72) Inventor: TURNEY, Joseph, Amston, CT 06231 (US)
(74) Representative: Dehns

(56) References cited:
- US-A- 2 617 361
- US-A- 4 245 964
- US-A1- 2012 266 600
- US-A1- 2014 026 592
- US-A1- 2014 150 440
- US-B1- 6 189 313
- US-B2- 10 138 816
- US-B2- 9 297 314

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section. The compressor section typically includes low and high pressure compressors, and the turbine section includes low and high pressure turbines.

Fuel supplied to the combustor is provided by a mechanical pump driven by a rotating shaft of the engine. The mechanical pump is reliable and supplies fuel in proportion to engine speed. The minimum capacity of the mechanical pump is sized such that sufficient fuel is provided for high power conditions. Excess fuel not needed is recirculated back to the fuel tank. The fuel is further utilized as a coolant for other systems of the engine. Recirculation of fuel increases the temperature of the fuel and thereby reduces the available capacity to absorb heat from other systems. The capacity of the fuel to absorb heat from other systems is further limited by the characteristics of the fuel. At a certain temperature the fuel begins to degrade and can reduce engine efficiency. Reducing the amount of fuel that is recirculated during engine operation may improve the capacity of the fuel to absorb heat from other systems.

Turbine engine manufacturers continuously seek improvements to engine performance including improvements to thermal, transfer and propulsive efficiencies.

An example of such an improvement is shown in US 4 245 964 A which describes a fluid pumping system in which a fluid is pumped from a fluid supply to a load, and two continuously driven fixed displacement pumps are operated in parallel to provide the pumping action. The two pumps are arranged with a common inlet, and with a common outlet, and the flow delivered to the load from one of the two pumps passes through a check valve upstream of the common outlet. The fluid flow is regulated to provide a constant pressure by sequentially bypassing fluid around each pump through separate pump bypass ducts. This sequential fluid bypassing or pump unloading is effected by a single control responsive to the flow requirements of the load necessary to maintain that constant pressure. The pump whose delivered flow outlet contains the check valve is the pump whose flow is bypassed initially when less than full pumping capacity is desired. During maximum flow demand operation, both pumps are delivering against full delivery pressure. During low flow demand operation only the pump without the check valve delivers against full pressure, the other pump being operated with essentially no pressure load.

US 2 617 361 A describes a fuel supply which includes a plurality of fuel Pumps connected to said supply and a fuel system delivery communication for receiving fuel under pressure individually discharged by said pumps. Fuel control means operable for regulating flow of fuel under pressure from said delivery communication in the form of biased relief valve devices are provided and interposed between the respective pumps and said delivery communication. The biasing means tends to close each of said relief valve devices. Fluid pressure means cooperative with said biasing means renders said devices selectively operative to effect bypassing of fuel discharged from each pump to the fuel supply, and fluid interlocked control means cooperative with said fluid pressure means for each of said devices for controlling successive operation thereof in accordance with variations in back pressure of fuel in said fuel system delivery communication established during regulation of said fuel control means.

US 2014/026592 A1 describes a structural unit for an aircraft engine having at least one fuel pump of a fuel circuit and at least one hydraulic fluid pump of a hydraulic fluid circuit, where the structural unit can be coupled to an accessory gearbox shaft of an accessory gearbox of the engine.

US 10 138 816 B2 describes a fuel pumping unit which has a low pressure centrifugal pump and a high pressure centrifugal pump. In use, the low pressure pump supplies fuel at a boosted pressure to the high pressure pump for onward supply to a fuel metering unit. The pumping unit further has a drive input which drives the low and high pressure pumps. A gear arrangement is operatively located between the drive input and the low and high pressure pumps such that the low and high pressure pumps are driven at different speeds by the drive input.

US 2012/266600 A1 describes a fuel feed circuit for an aeroengine, the circuit including a high-pressure pumping system including first and second positive displacement pumps, a hydraulic actuator, and a fuel metering unit. As a function of a position of a slide of the actuator, a feed orifice of the actuator may be connected to a high-pressure delivery orifice connected to an outlet of the second pump, or to a low-pressure delivery orifice connected to a low-pressure feed line. The fuel metering unit includes through sections, one of these through sections being connected to an outlet of the high-pressure pumping system and the other through section being connected to an outlet of the high-pressure pumping system and leading to a high-pressure pilot chamber of the hydraulic actuator.

### SUMMARY

A fuel system for a gas turbine engine according to an aspect of the present invention is defined in claim 1 and comprises, an accessory gearbox driven by a mechanical link to the gas turbine engine, a primary fuel pump providing a first fuel flow during engine operation, and a secondary fuel pump providing a second fuel flow. The primary fuel pump and the secondary fuel pump are driven by an output of the accessory gearbox. A first control valve is upstream of the secondary fuel pump and a second control valve is downstream of the secondary fuel pump. The first control valve and the second control valve controlling communication of fuel to and from the secondary fuel pump. The first fuel pump and the second fuel pump both receive fuel flow from a common inlet passage. Both the first fuel pump and the second fuel pump communicate the corresponding one of the first fuel flow and the second fuel flow to a common outlet passage.

In an embodiment not forming part of the invention the fuel system comprises a pump drive gearbox which is selectively coupled to drive the secondary fuel pump by a clutch means.

In an embodiment not forming part of the invention the fuel system comprises, a first pressure relief valve in which the first pressure relief valve is for switching the primary fuel pump and the secondary fuel pump between a series arrangement, where the first fuel flow is provided by both the primary and secondary fuel pumps. A parallel arrangement is included where the first fuel flow is provided by the primary fuel pump and the secondary fuel flow is provided by the secondary fuel pump.

In an embodiment not forming part of the invention the the first pressure relief valve is disposed between an outlet of the primary fuel pump and an inlet of the secondary fuel pump. The first pressure relief valve opens to communicate fuel from the primary fuel pump to the secondary fuel pump to provide the first fuel flow in a first operating condition. The first pressure relief valve closes such that the secondary fuel pump provides the second fuel flow in parallel with the first fuel flow provided by the primary mechanical fuel pump to a common fuel passage in a second operating condition.

In an embodiment not forming part of the invention the fuel system comprises, a first check valve, in which the first check valve is in a first passage downstream of the primary mechanical fuel pump to control fuel flow from the first passage into the common fuel passage. A second check valve is in a second passage communicating fuel to an inlet of the secondary fuel pump.

In an embodiment not forming part of the invention the fuel system comprises, a second pressure relief valve in which the second pressure relief valve is downstream of both the primary fuel pump and the secondary fuel pump for directing fuel flow away from the common fuel passage in response to a pressure within the common fuel passage above a predefined pressure.

In an embodiment of any of the above embodiments, a flow capacity of the primary fuel pump and the secondary fuel pump are different.

In an embodiment of any of the above embodiments, a flow capacity of the primary fuel pump and the secondary fuel pump are the same.

A gas turbine engine according to a further aspect of the present invention comprises, a fan rotatable within a fan nacelle, and a core engine which includes a compressor communicating compressed air to a combustor where compressed air is mixed with fuel and ignited to generate a high-energy gas flow expanded through a turbine and a fuel system as claimed in claim 1.

A method of supplying fuel to a combustor of a gas turbine engine according to an aspect of the present invention is defined in claim 5 and comprises, operating a primary fuel pump to provide a first fuel flow, and operating a secondary fuel pump to provide a second fuel flow. Operating the primary fuel pump and the secondary fuel pump comprises driving the primary fuel pump and the secondary fuel pump with an output from an accessory gearbox. The first fuel flow is communicated to a combustor of the gas turbine engine in a first operating condition and communicating the first fuel flow and the second fuel flow to the combustor in a second operating condition. The operation of a first control valve (88) upstream of the secondary fuel pump (80) and a second control valve (90) downstream of the secondary fuel pump (80) is used to determine first or second operating condition for the supply of fuel to the combustor (56) of the gas turbine engine (20).

In a method not forming part of the invention the first fuel flow communicated to the combustor comprises directing fuel from an outlet of the primary fuel pump to an inlet of the secondary fuel pump in the first operating condition. Communicating both the first fuel flow and the second fuel flow comprises blocking fuel flow from the outlet of the primary fuel pump to the inlet of the secondary fuel pump. Fuel from a fuel source is communicated to the inlet of the secondary fuel pump and both the first fuel flow from the primary pump and the secondary fuel flow from the secondary pump is routed to a common fuel outlet passage.

In an embodiment not forming part of the invention of the above method of supplying fuel to a combustor of a gas turbine engine comprises communicating the first fuel flow to the combustor, and further comprises flowing fuel from primary fuel pump to a common fuel outlet passage and blocking flow from the secondary fuel pump during the first engine operating condition. Communicating the first fuel flow and the second fuel flow to the combustor in the second operating condition comprises communicating both the first fuel flow from the primary fuel pump and the second fuel flow from the secondary fuel pump to the common fuel outlet passage.

These and other features disclosed herein can be best understood from the following specification and drawings, the following of which is a brief description.

### BRIEF DESCRIPTION OF THE DRAWINGS

Figure 1 is a schematic view of a gas turbine engine.
Figure 2 is a schematic view of a fuel system according to the invention in a first operating condition.
Figure 3 is another schematic view of the fuel system according to the invention in a second operating condition.
Figure 4 is a schematic view of a fuel system not belonging to the invention .
Figure 5 is a schematic view of another fuel system not belonging to the invention in a first operating condition.
Figure 6 is a schematic view of the fuel system not belonging to the invention in a second operating condition.

### DETAILED DESCRIPTION

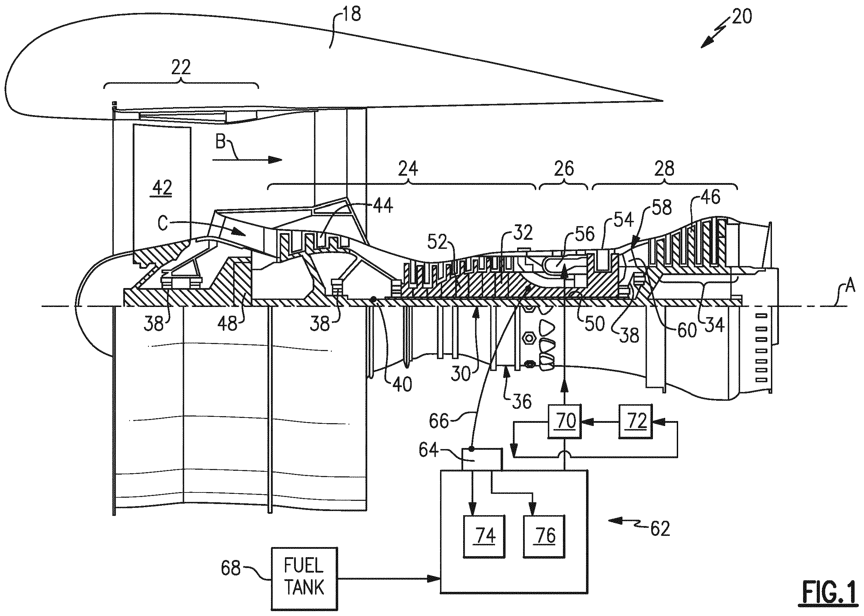

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 18, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including but not limited to three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that the various bearing systems 38 may alternatively or additionally be provided at different locations, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to a fan section 22 through a speed change mechanism, which in exemplary gas turbine engine 20 is illustrated as a geared architecture 48 to drive fan blades 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 58 of the engine static structure 36 may be arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor 44 and the fan blades 42 may be positioned forward or aft of the location of the geared architecture 48 or even aft of turbine section 28.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. The low pressure turbine 46 pressure ratio is pressure measured prior to the inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including but not limited to direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)] ^{0.5} (where °R = K x 9/5). The "Low corrected fan tip speed" as disclosed herein according to one non-limiting embodiment is less than about 1150 ft / second (350.5 meters/second).

The example gas turbine engine includes the fan section 22 that comprises in one non-limiting embodiment less than about 26 fan blades 42. In another non-limiting embodiment, the fan section 22 includes less than about 20 fan blades 42. Moreover, in one disclosed embodiment the low pressure turbine 46 includes no more than about 6 turbine rotors schematically indicated at 34. In another non-limiting example embodiment, the low pressure turbine 46 includes about 3 turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

Fuel is delivered to the combustor 56 by a fuel system 62. The example fuel system 62 includes a primary system 74 and a secondary system 76. Fuel from a fuel tank 68 is pumped to a desired pressure and provided to the combustor 56. The disclosed fuel system 62 tailors a flow of fuel to the combustor 56 based on engine operating conditions. Instead of simply providing a fuel flow that provides for extremes of operating demands, the disclosed fuel system 62 tailors the flow of fuel according to a demand for fuel. By tailoring the flow of fuel to engine operating demand, fuel directed through a fuel recirculation loop for excess fuel can be reduced and/or eliminated.

Fuel is utilized as a heat sink to cool other flows within the engine such as lubricant and air flows. In this example, a heat fuel/oil heat exchanger 70 cools a flow of lubricant generated by a lubricant system 72. Recirculation of fuel results in an increased temperature of the fuel and thereby a reduced capability to accept heat from other engine systems, such as the example lubricant system 72.

The disclosed fuel system 62 varies the flow of fuel based on demand to reduce and/or eliminate the recirculation of fuel and thereby increase the ability to accept heat from other engine systems. The disclosed fuel system 62 includes mechanically driven pumps to provide a reliable and robust fuel system 62. The example fuel system 62 is driven by outputs from an accessory gearbox 64. The accessory gearbox 64 is in turn driven by a shaft of the gas turbine engine 20. In this example, the accessory gearbox 64 is driven though a tower shaft 66 coupled to the outer shaft 50. Although the example gearbox 64 is driven by the tower shaft 66 coupled to the outer shaft 50 of the high speed spool 32 other couplings could be utilized to drive the accessory gearbox 64 and are within the scope and contemplation of this disclosure.

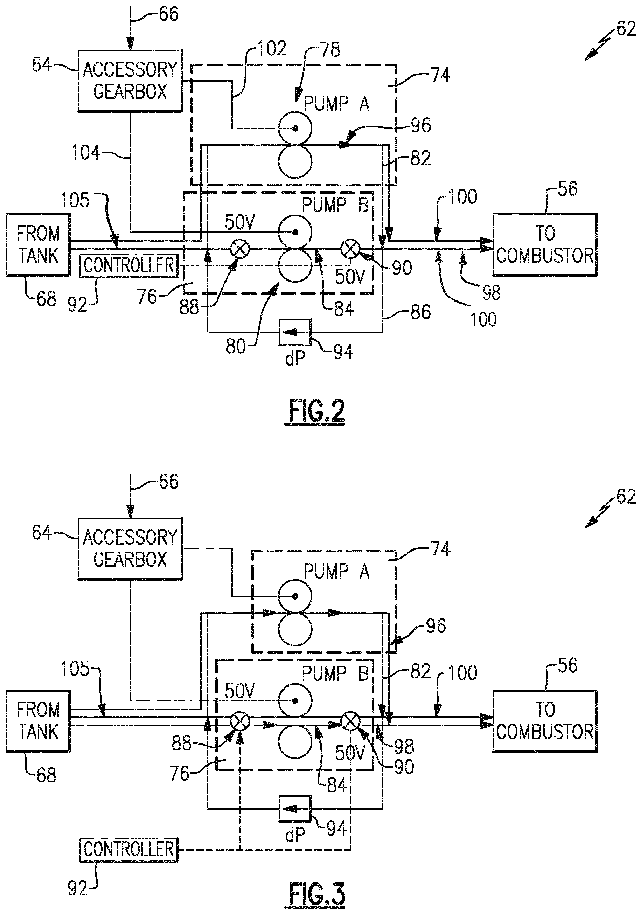

Referring to Figure 2 with continued reference to Figure 1, the fuel system includes a primary fuel pump 78 that provides a first fuel flow 96 during engine operation. The system 62 includes a secondary fuel pump 80 that provides a second fuel flow 98. Both the primary fuel pump 78 and the secondary fuel pump 80 are driven by outputs of the accessory gearbox 64. In the disclosed example, a first shaft shown schematically at 102 drives the primary fuel pump 78 and a second shaft schematically shown at 104 drives the secondary fuel pump 80.

The first fuel pump 78 and the second fuel pump 80 both receive fuel flow from a common inlet passage 105 and both the first fuel pump 78 and the second fuel pump 80 communicate fuel flow to a common outlet passage 100. The first fuel pump 78 communicates fuel flow through a first passage 82. The second fuel pump 80 communicates fuel flow through a second passage 84. A recirculation passage 86 communicates excess fuel from near the outlet 100 to a location upstream of both the first and second pumps 78, 80.

A first control valve 88 is disposed within the second passage 84 upstream of the secondary fuel pump 80. A second control valve 90 is disposed within the second passage downstream of the secondary fuel pump 80. A controller 92 governs operation of first control valve 88 and the second control valve 90 to control communication of fuel to and from the secondary fuel pump 80.

Both the primary and secondary fuel pumps 78, 80 are mechanical constant volume fuel pumps driven by the shafts 102, 104 from the accessory gearbox 64. The primary and secondary pumps 78, 80 in one disclosed embodiment provide identical fuel flow volumes. In another disclosed embodiment, the primary and secondary pumps 78, 80 provide different fuel flow volumes.

Because both the primary and secondary pumps 78, 80 are mechanically linked to corresponding shafts 102, 104, the secondary fuel pump 80 runs even when fuel is not suppled through the second passage because the control valves 88, 90 are closed. In the first operating condition with both the first and second control valves 88, 90 closed, the primary fuel pump 78 generates a first fuel flow 96 through the first flow passage 82. The secondary fuel pump 80 does not provide fuel flow because the control valves 88, 90 are closed.

The first fuel flow 96 of a defined volume determined to provide sufficient fuel for engine operating conditions that are less then maximum. Accordingly, when the engine is operating in low fuel demand conditions such as during a cruise or descent condition, only the first fuel flow 96 is provided. The reduced fuel flow during the low demand conditions reduces the amount of fuel that may be recirculated through the recirculation passage 86. The recirculation passage 86 includes a pressure relieve valve 94 that enables a uniform pressure of fuel flow to the combustor 56.

Referring to Figure 3, with continued reference to Figure 1, in higher fuel demand conditions such as take-off and climb conditions, the controller 92 opens the control valves 88, 90 to communicate fuel to the secondary fuel pump 80. The secondary fuel pump 80 generates a second fuel flow 98 through the second passage 84 that combines with the first fuel flow 96 from the first passage 82. The combined first and second fuel flows 96, 98 are both communicated through the common outlet 100 to the combustor 56. Once the engine transitions back to a low fuel demand operating condition, the control valves 88, 90 are closed and the first fuel flow 96 continues to be communicated to the combustor 56. The second fuel flow 98 is stopped and the reduced fuel flow continues at levels tailored to current engine operation.

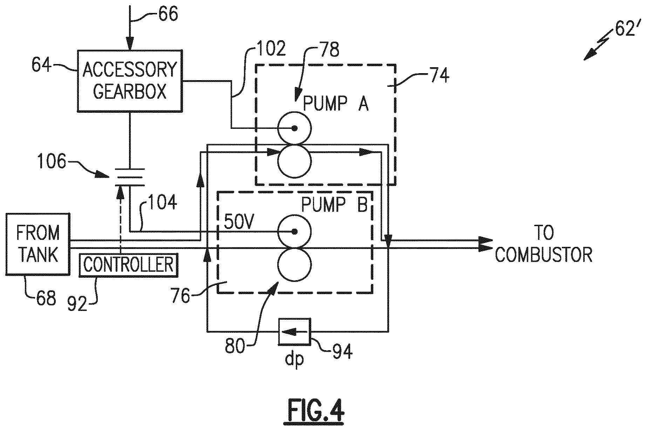

Referring to Figure 4, with continued reference to Figure 1, another fuel system is schematically shown at 62'. The fuel system 62' includes a clutch 106 for selectively coupling the shaft 104 to the accessory gearbox 64. The clutch 106 may be decoupled to deactivate the secondary pump 80. Accordingly, rather than continually drive the secondary pump 80 when not needed, the example fuel system 62' decouples the secondary pump 80. Because the secondary pump 80 is decoupled and therefore not provide the secondary fuel flow 96, the control valves 88, 90 are not needed and are removed. The controller 92 selectively actuates the clutch 106 when the additional fuel flow is needed for engine operation.

The fuel systems 62, 62' thereby operate to combine fuel flows in parallel fuel passages to accommodate fuel demands according to engine operating conditions.

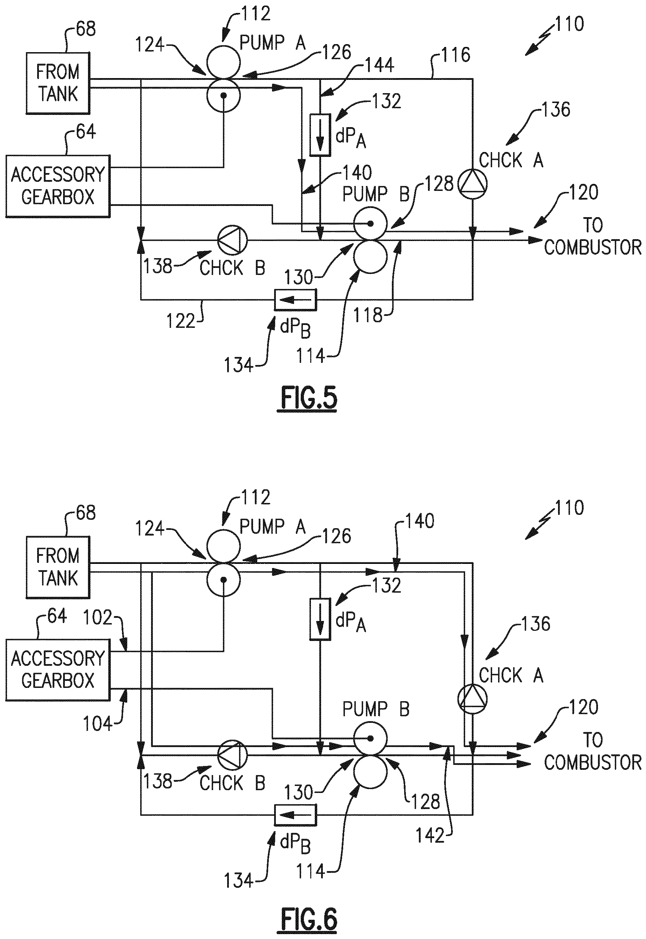

Referring to Figures 5 and 6, another fuel system is disclosed and schematically indicated at 110. The fuel system 110 includes a primary fuel pump 112 and a secondary fuel pump 114. The primary fuel pump 112 and the secondary fuel pump 114 are identical constant volume mechanical gear mesh pumps arranged to operate both in series and in parallel depending on fuel flow demand.

The primary fuel pump 112 includes an inlet 124 and an outlet 126 and is disposes upstream of the secondary fuel pump 114. The secondary fuel pump 114 includes an inlet 130 and an outlet 128. The fuel system 110 includes a first fuel passage 116 in parallel with a second fuel passage 118. Both the first fuel passage 116 and the second fuel passage 118 are in communication with a common fuel outlet 120 and the fuel tank 68.

A first pressure relief valve 132 is disposed within a crossover passage 144 that communicates fuel from the outlet 126 of the primary fuel pump 112 to the inlet 130 of the secondary fuel pump 130. The first pressure relief valve 132 enables switching between a series arrangement where a first fuel flow 140 is provided through both the primary and secondary fuel pumps 112, 114 and a parallel arrangement where the first fuel flow 140 is provided by the primary fuel pump 112 and a secondary fuel flow 142 (Figure 6) is provided by the secondary fuel pump 114.

The first pressure relief valve 132 opens to communicate fuel from the primary fuel pump 112 to the secondary fuel pump 114 to provide the first fuel flow 140 in a first operating condition (Figure 5). The first operating condition corresponds with low fuel demand operation such as during decent or cruise conditions. In low fuel demand operating conditions, a fuel pressure at the common outlet 120 maintains a first check valve 136 in a closed position and the first pressure relief valve 132 is open. A second check valve 138 upstream of the secondary fuel pump 114 is also closed to prevent communication of fuel independent of the primary fuel pump 112.

Upon an increase in fuel demand for engine operating conditions such as takeoff and climb operations, a pressure at the common outlet passage 120 will drop due to the increased fuel flow. The drop in fuel pressure opens the first check valve 136 and closes the first relief valve 132. The second check valve 138 also opens. Fuel flow from the primary fuel pump 112 proceeds through passage 116 to the common outlet 120 independent of fuel flow in the second passage 118. The second passage 118 is now open to receive fuel from the fuel tank 68 and provides a second fuel flow 142 to double the fuel flow through the common outlet 120. Accordingly, once the first pressure relief valve 132 closes, the secondary fuel pump 114 provides the second fuel flow 142 in parallel with the first fuel flow 140 provided by the primary mechanical fuel pump 112 to the common fuel passage 120.

A second pressure relief valve 134 is disposed downstream of both the primary fuel pump 112 and the secondary fuel pump 114 for directing excess fuel flow through a recirculation passage 122 in response to a pressure within the common fuel passage 120 above a predefined pressure. However, once pressure increase at the common fuel passage 120, the fuel system will switch back to the series arrangement. In response to an increase in fuel pressure that would accompany a drop in fuel demand based on engine operating conditions, the first check valve 136 would close. Closing of the first check valve 136 is followed by opening of the first relief valve 132 such that fuel from the primary fuel pump 112 is directed through the cross-over passage 144 to the secondary fuel pump 114 as is shown in Figure 5. Accordingly, the disclosed fuel system 110 switches between series and parallel flow arrangements in response changes in fuel pressures caused by changes in fuel flow demands. The first relief valve 132 may be a controlled valve or may be a mechanical valve that opens in response to fuel pressure. In this example, the first relief valve 132 is configured to open at a lower differential pressure than the second pressure relief valve 134.

Accordingly, the fuel systems 62, 62' and 110 tailor fuel flow to engine operating demands while maintaining the proven reliability and robust operation of mechanical constant volume pumps.

Although an example has been disclosed, a worker of ordinary skill in this art would recognize that certain modifications would come within the scope of this disclosure. For that reason, the following claims should be studied to determine the scope and content of this disclosure.

## Claims

1. A fuel system (62) for a gas turbine engine (20) comprising:
an accessory gearbox (64) driven by a mechanical link to the gas turbine engine (20);
a primary fuel pump (78) providing a first fuel flow (96) during engine operation;
a secondary fuel pump (80) providing a second fuel flow (98), wherein the primary fuel pump (78) and the secondary fuel pump (80) are driven by an output of the accessory gearbox (64):
**characterised in that** the fuel system (62) further comprises a first control valve (88) upstream of the secondary fuel pump (80);
a second control valve (90) downstream of the secondary fuel pump (80); the first control valve (88) and the second control valve (90) configured to control communication of fuel to and from the secondary fuel pump (80), wherein the first fuel pump (78) and the second fuel pump (80) both receive fuel flow from a common inlet passage (105) and both the first fuel pump (78) and the second fuel pump (80) communicate the corresponding one of the first fuel flow (96) and the second fuel flow (98) to a common outlet passage (100).

2. The fuel system as recited in claim 1, wherein a flow capacity of the primary fuel pump and the secondary fuel pump are different.

3. The fuel system as recited in claim 1, wherein a flow capacity of the primary fuel pump and the secondary fuel pump are the same.

4. A gas turbine engine comprising:
a fan (42) rotatable within a fan nacelle (18);
a core engine including a compressor (24) communicating compressed air to a combustor (26) where compressed air is mixed with fuel and ignited to generate a high-energy gas flow expanded through a turbine (28); and a fuel system (62) according to any of claims 1 to 3.

5. A method of supplying fuel to a combustor (56) of a gas turbine engine (20) comprising:
operating a primary fuel pump (112) to provide a first fuel flow (140);
operating a secondary fuel pump (114) to provide a second fuel flow (142), wherein operating the primary fuel pump (112) and the secondary fuel pump (140) comprises driving the primary fuel pump (112) and the secondary fuel pump (140) with an output from an accessory gearbox (64); and
communicating the first fuel flow (140) to a combustor (56) of the gas turbine engine (20) in a first operating condition and communicating the first fuel flow (140) and the second fuel flow (142) to the combustor (56) in a second operating condition; **characterized in that** the operation of a first control valve (88) upstream of the secondary fuel pump (80) and a second control valve (90) downstream of the secondary fuel pump (80) is used to determine first or second operating condition for the supply of fuel to the combustor (56) of the gas turbine engine (20).

## Patentansprüche

1. Kraftstoffsystem (62) für ein Gasturbinentriebwerk (20), Folgendes umfassend:
ein Hilfsgetriebe (64), das durch eine mechanische Verbindung mit dem Gasturbinentriebwerk (20) angetrieben wird;
eine primäre Kraftstoffpumpe (78), die während des Triebwerksbetriebs einen ersten Kraftstofffluss (96) bereitstellt;
eine sekundäre Kraftstoffpumpe (80), die einen zweiten Kraftstofffluss (98) bereitstellt, wobei die primäre Kraftstoffpumpe (78) und die sekundäre Kraftstoffpumpe (80) durch einen Ausgang des Hilfsgetriebes (64) angetrieben werden:
**dadurch gekennzeichnet, dass** das Kraftstoffsystem (62) ferner ein erstes Steuerventil (88) stromaufwärts der sekundären Kraftstoffpumpe (80) umfasst;
ein zweites Steuerventil (90) stromabwärts der sekundären Kraftstoffpumpe (80); wobei das erste Steuerventil (88) und das zweite Steuerventil (90) dazu konfiguriert sind, die Kraftstoffübertragung zu und von der sekundären Kraftstoffpumpe (80) zu steuern, wobei die erste Kraftstoffpumpe (78) und die zweite Kraftstoffpumpe (80) beide einen Kraftstofffluss von einem gemeinsamen Einlasskanal (105) empfangen und sowohl die erste Kraftstoffpumpe (78) als auch die zweite Kraftstoffpumpe (80) den entsprechenden von dem ersten Kraftstofffluss (96) und dem zweiten Kraftstofffluss (98) an einen gemeinsamen Auslasskanal (100) übertragen.

2. Kraftstoffsystem nach Anspruch 1, wobei eine Flusskapazität der primären Kraftstoffpumpe und der sekundären Kraftstoffpumpe unterschiedlich ist.

3. Kraftstoffsystem nach Anspruch 1, wobei eine Flusskapazität der primären Kraftstoffpumpe und der sekundären Kraftstoffpumpe gleich ist.

4. Gasturbinentriebwerk, Folgendes umfassend:
ein Gebläse (42), das innerhalb einer Gebläsegondel (18) drehbar ist;
ein Kerntriebwerk, das einen Verdichter (24), der verdichtete Luft zu einer Brennkammer (26) überträgt, wo verdichtete Luft mit Kraftstoff gemischt und gezündet wird, um einen hochenergetischen Gasfluss zu erzeugen, der durch eine Turbine (28) expandiert wird; und ein Kraftstoffsystem (62) nach einem der Ansprüche 1 bis 3 beinhaltet.

5. Verfahren zum Zuführen von Kraftstoff zu einer Brennkammer (56) eines Gasturbinentriebwerks (20), Folgendes umfassend:
Betreiben einer primären Kraftstoffpumpe (112), um einen ersten Kraftstofffluss (140) bereitzustellen;
Betreiben einer sekundären Kraftstoffpumpe (114), um einen zweiten Kraftstofffluss (142) bereitzustellen, wobei das Betreiben der primären Kraftstoffpumpe (112) und der sekundären Kraftstoffpumpe (140) das Antreiben der primären Kraftstoffpumpe (112) und der sekundären Kraftstoffpumpe (140) mit einem Ausgang von einem Hilfsgetriebe (64) umfasst; und
Übertragen des ersten Kraftstoffflusses (140) zu einer Brennkammer (56) des Gasturbinentriebwerks (20) in einem ersten Betriebszustand und Übertragen des ersten Kraftstoffflusses (140) und des zweiten Kraftstoffflusses (142) zu der Brennkammer (56) in einem zweiten Betriebszustand; **dadurch gekennzeichnet, dass** der Betrieb eines ersten Steuerventils (88) stromaufwärts der sekundären Kraftstoffpumpe (80) und eines zweiten Steuerventils (90) stromabwärts der sekundären Kraftstoffpumpe (80) verwendet wird, um den ersten oder zweiten Betriebszustand für die Kraftstoffzufuhr zu der Brennkammer (56) des Gasturbinentriebwerks (20) zu bestimmen.

## Revendications

1. Système de carburant (62) pour un moteur à turbine à gaz (20) comprenant :
un boîtier d'accessoires (64) entraîné par une liaison mécanique au moteur à turbine à gaz (20) ;
une pompe à carburant principale (78) fournissant un premier débit de carburant (96) pendant le fonctionnement du moteur ;
une pompe à carburant secondaire (80) fournissant un second débit de carburant (98), dans lequel la pompe à carburant principale (78) et la pompe à carburant secondaire (80) sont entraînées par une sortie du boîtier d'accessoires (64) :
**caractérisé en ce que** le système de carburant (62) comprend également une première vanne de commande (88) en amont de la pompe à carburant secondaire (80) ;
une seconde vanne de commande (90) en aval de la pompe à carburant secondaire (80) ; la première vanne de commande (88) et la seconde vanne de commande (90) étant configurées pour commander la communication de carburant vers et depuis la pompe à carburant secondaire (80), dans lequel la première pompe à carburant (78) et la seconde pompe à carburant (80) reçoivent toutes deux un débit de carburant d'un passage d'entrée commun (105) et la première pompe à carburant (78) et la seconde pompe à carburant (80) communiquent le premier débit de carburant (96) et le second débit de carburant (98) correspondant à un passage de sortie commun (100).

2. Système de carburant selon la revendication 1, dans lequel des capacités du débit de la pompe à carburant principale et de la pompe à carburant secondaire sont différentes.

3. Système de carburant selon la revendication 1, dans lequel des capacités du débit de la pompe à carburant principale et de la pompe à carburant secondaire sont les mêmes.

4. Moteur à turbine à gaz comprenant :
une soufflante (42) pouvant tourner à l'intérieur d'une nacelle de soufflante (18) ;
un moteur central comportant un compresseur (24) communiquant de l'air comprimé à une chambre de combustion (26) dans laquelle l'air comprimé est mélangé avec du carburant et allumé pour générer un débit de gaz à haute énergie détendu à travers une turbine (28) ; et un système de carburant (62) selon l'une quelconque des revendications 1 à 3.

5. Procédé d'alimentation en carburant d'une chambre de combustion (56) d'un moteur à turbine à gaz (20) comprenant :
le fait de faire fonctionner une pompe à carburant principale (112) pour fournir un premier débit de carburant (140) ;
le fait de faire fonctionner une pompe à carburant secondaire (114) pour fournir un second débit de carburant (142), dans lequel le fait de faire fonctionner la pompe à carburant principale (112) et la pompe à carburant secondaire (140) comprend l'entraînement de la pompe à carburant principale (112) et de la pompe à carburant secondaire (140) avec une sortie provenant d'un boîtier d'accessoires (64) ; et
la mise en communication du premier débit de carburant (140) et d'une chambre de combustion (56) du moteur à turbine à gaz (20) dans un premier état de fonctionnement et la mise en communication du premier débit de carburant (140) et du second débit de carburant (142) et de la chambre de combustion (56) dans un second état de fonctionnement ; **caractérisé en ce que** le fonctionnement d'une première vanne de commande (88) en amont de la pompe à carburant secondaire (80) et d'une seconde vanne de commande (90) en aval de la pompe à carburant secondaire (80) est utilisé pour déterminer un premier ou un second état de fonctionnement pour l'alimentation en carburant de la chambre de combustion (56) du moteur à turbine à gaz (20).
